# EUROPEAN PATENT APPLICATION

(11) **EP 1 887 573 A1**
(43) Date of publication of application: **13.02.2008**
(21) Application number: 07015368.9
(22) Date of filing: 06.08.2007
(51) Int. Cl.: G11B 7/135, G02B 26/08

(54) **Variable shape mirror**

(30) Priority: 09.08.2006 JP 2006216636
(71) Applicant: Funai Electric Co., Ltd., Daito-shi, Osaka 574-0013 (JP); The Ritsumeikan Trust, Kyoto-shi, Kyoto 604-8520 (JP)
(72) Inventor: Tanaka, Fuminori, Daito-shi, Osaka 574-0013 (JP); Tanaka, Katsuhiko, Kusatsu, Shiga, 525-8577 (JP); Ishii, Akira, Kusatsu, Shiga, 525-8577 (JP); Sugiyama, Susumu, Kusatsu, Shiga, 525-8577 (JP)
(74) Representative: Beetz & Partner

(57) **Abstract**

A variable shape mirror includes a support substrate, a mirror substrate that is opposed to the support substrate, a fixing member that is disposed on the support substrate and fixes the mirror substrate, and a piezoelectric element that is disposed on the support substrate and is expanded or contracted so as to deform a reflection plane of the mirror substrate. A bonding layer for bonding the mirror substrate and the fixing member to each other is provided to the surface of the mirror substrate opposite to the surface on which the reflection plane is formed, and the bonding layer is formed in an area that corresponds to the outside of an incident area of a light beam that enters the reflection plane.

## Description

### BACKGROUND OF THE INVENTION

### Field of the Invention

The present invention relates to a variable shape mirror that is provided to an optical device such as an optical pickup device and is capable of changing a shape of its reflection plane. More specifically, the present invention relates to a variable shape mirror having a structure that is capable of reducing distortion that may appear in the reflection plane when it is assembled.

### Description of Related Art

Conventionally, there are various proposals about a variable shape mirror that is capable of changing a shape of its reflection plane so as to correct optical distortion or the like of an incident light beam, and such a variable shape mirror is used in wide range of applications including an image processing apparatus and an optical pickup device.

For example, in the field of the optical pickup device, the variable shape mirror is used for correcting wave aberration that may occur when information is read or written on an optical disc such as a CD (compact disc) or a DVD (digital versatile disc), which includes coma aberration that may happen when a disc surface of the optical disc is tilted with respect to the optical axis and spherical aberration resulted from a variation of a transparent resin film (a protective layer) that protects the recording surface of the optical disc, as shown in JP-A-2004-109562 or JP-A-2005-196859.

As this variable shape mirror, there is a variable shape mirror having a unimorph or a bimorph shape using a piezoelectric element as shown in JP-A-2004-109562, as well as a variable shape mirror that is made of laminated thin films such as piezoelectric films as shown in JP-A-2005-196859. As another type of the variable shape mirror, there is a variable shape mirror that can deform its reflection plane utilizing expansion and contraction of a column-shaped piezoelectric element (piezoelectric actuator) in the longitudinal direction (the vertical direction), as shown in JP-A-H05-333274. Furthermore, the variable shape mirror that can deform its reflection plane utilizing expansion and contraction of the piezoelectric element in the longitudinal direction has an advantage in that it can be manufactured easily. It has another advantage in cost in addition to its easiness of manufacturing compared with the variable shape mirror disclosed in JP-A-2005-196859, which is made of laminated thin films.

### SUMMARY OF THE INVENTION

However, the variable shape mirror that can deform its reflection plane utilizing expansion and contraction of the piezoelectric element in the longitudinal direction has a following problem.

As to the variable shape mirror that can deform its reflection plane utilizing expansion and contraction of the piezoelectric element in the longitudinal direction, an adhesive layer (a bonding layer) such as an adhesive or a metal film is used for bonding a mirror substrate with a fixing member that fixes the mirror substrate and with the piezoelectric element. Therefore, when the variable shape mirror is assembled, the adhesive layer is provided to the surface of the mirror substrate opposite to the surface to which the reflection plane is provided, and then the fixing member and the piezoelectric element are bonded to the mirror substrate. Furthermore, in the conventional method, considering that both the fixing member and the piezoelectric element are bonded to the mirror substrate, the adhesive layer is provided to the entire of the surface of the mirror substrate to which the fixing member and the piezoelectric element are bonded.

When the mirror substrate and the fixing member or the piezoelectric element are bonded to each other, the adhesive layer should be provided to the mirror substrate. This is because that the adhesive layer that is disposed between the mirror substrate and the fixing member or the like should be thinner and uniform. More specifically, in order to form a thin and uniform adhesive layer (the thickness is 2 µm or less), the method of providing a metal layer (e.g., an Au layer) as the adhesive layer is advantageous because the adhesive layer can be formed easily. In this case, however, the adhesive layer should be formed on both the mirror substrate and the fixing member or the piezoelectric element for sufficient bonding. Therefore, the adhesive layer is formed on the mirror substrate, too. In addition, if adhesive is used for forming a thin and uniform adhesive layer, a spin coating method or the like is used. However, it is difficult to form a thin and uniform adhesive layer on the fixing member and the piezoelectric element. Therefore, it is necessary to provide the adhesive layer on the mirror substrate also in the case where adhesive is used.

The reason why the adhesive layer is formed in a thin layer is that if the adhesive layer is too thick, the mirror substrate cannot be deformed sufficiently by the expansion and contraction of the piezoelectric element. The reason why the adhesive layer is formed in a uniform layer is for performing the bonding process uniformly.

However, it is found from research performed by the inventor that when the Au layer having a thickness of approximately 1 µm is formed as the adhesive layer on the mirror substrate (Si substrate) having a size of 12 mm x 12 mm and a thickness of approximately 100 µm a maximum value of flexure with respect to the horizontal state of the mirror substrate that occurs in the mirror substrate becomes approximately 10-15µm. Note that this flexure may be resulted from residual stress such as tensile stress or compressive stress that may occur in the formed Au layer.

Therefore, it is found that there is a problem as follows in the structure where the adhesive layer is formed on the entire surface of the mirror substrate as the conventional structure (including the structure in which filler agent is provided on the entire surface of the mirror substrate as described in JP-A-H05-333274). The problem is that because of distortion that may occur when the adhesive layer is formed, bonding between the mirror substrate and the fixing member or the like causes large stress (distortion) on the reflection plane that is provided to the mirror substrate, resulting in insufficient correction of the optical distortion by the variable shape mirror.

An object of the present invention is to provide a variable shape mirror that can deform its reflection plane and has a structure capable of suppressing distortion that may occur in the reflection plane in its assembling process.

A variable shape mirror of the present invention includes a support substrate, a mirror substrate that is opposed to the support substrate and has a reflection plane on the surface opposite to the surface facing the support substrate, a fixing member that is disposed on the support substrate and fixes the mirror substrate, and a piezoelectric element that is disposed on the support substrate and is expanded or contracted when a voltage is applied so that an area of the mirror substrate enclosed by a portion fixed by the fixing member can be deformed. The variable shape mirror deforms the mirror substrate as well as the reflection plane by applying a voltage to the piezoelectric element. A bonding layer for bonding the mirror substrate and the fixing member to each other is provided to the surface of the mirror substrate opposite to the surface on which the reflection plane is formed, and the bonding layer is formed in an area that corresponds to the outside of an incident area of a light beam that enters the reflection plane.

According to this structure, the bonding layer to be provided to the mirror substrate for bonding to the fixing member is formed on it except for the portion that is improper if distortion occurs in the reflection plane. Therefore, when the variable shape mirror is assembled, distortion that may occur in the reflection plane can be suppressed. Thus, degrade of performance of the variable shape mirror can be small when it is manufactured.

In addition, it is preferable that the variable shape mirror of the present invention having the above-mentioned structure also has the following feature, that is, the bonding layer to be provided to the mirror substrate is formed only in the portion where the mirror substrate is bonded to the fixing member.

According to this structure, the bonding layer, which is provided for bonding the mirror substrate and the fixing member for supporting the mirror substrate to each other, is formed only between them. Therefore, residual distortion that may remain in the mirror substrate can be as small as possible, so that distortion in the reflection plane that may occur in the assembling process can be suppressed as much as possible.

In addition, it is preferable that the variable shape mirror of the present invention having the above-mentioned structure also has the following feature, that is, the bonding layer is a metal layer that can bond the mirror substrate and the fixing member to each other by thermocompression bonding.

According to this structure, since the mirror substrate and the fixing member are bonded by using the metal layer, a thin bonding layer can be made easily, and it is easy to form the bonding layer only in a particular portion.

In addition, it is preferable that the variable shape mirror of the present invention having the above-mentioned structure also has the following feature, that is, a thickness of the mirror substrate is in a range of 50-300 µm.

According to this structure, since the mirror substrate is formed in a thin shape, the reflection plane can be deformed efficiently, while distortion in the reflection plane that may occur in the assembling process can be reduced effectively concerning the mirror substrate that may generate distortion easily in the reflection plane in the assembling process due to the bonding layer.

In addition, it is preferable that the variable shape mirror of the present invention having the above-mentioned structure also has the following feature, that is, the mirror substrate and the piezoelectric element are not bonded to each other.

According to this structure, since the piezoelectric element and the mirror substrate are not bonded to each other, distortion in the reflection plane resulted from residual stress that occurs in the bonding layer can be further suppressed.

### BRIEF DESCRIPTION OF THE DRAWINGS

Fig. 1 is a diagram showing a structure of a variable shape mirror according to an embodiment of the present invention, which is an exploded perspective view in which structural elements of the variable shape mirror are shown in an exploded manner.
Fig. 2 is a general cross sectional view of the variable shape mirror shown in Fig. 1 in the assembled state, cut along the line A-A in Fig. 1.
Fig. 3 is a diagram showing a state where a piezoelectric element is expanded in the variable shape mirror shown in Fig. 2.
Fig. 4 is a cross sectional view showing a variation of the mirror substrate that is provided to the variable shape mirror of the present embodiment.
Fig. 5 is a general plan view of the surface of the mirror substrate that is provided to the variable shape mirror of the present embodiment, which is opposed to the support substrate.
Fig. 6 is a general plan view showing a variation of a structure of the surface of the mirror substrate that is opposed to the support substrate.

### DETAILED DESCRIPTION OF THE PREFERRED EMBODIMENTS

Hereinafter, an embodiment of the present invention will be described with reference to the attached drawings. Note that the embodiment described here is merely an example, and that the present invention is not limited to this embodiment.
In addition, sizes and thicknesses and the like of individual elements in the drawings are shown for a purpose of easy understanding and do not always match the real structure.

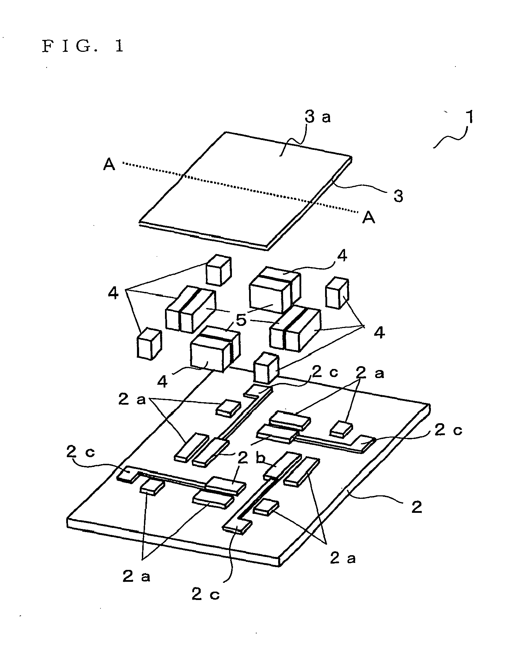

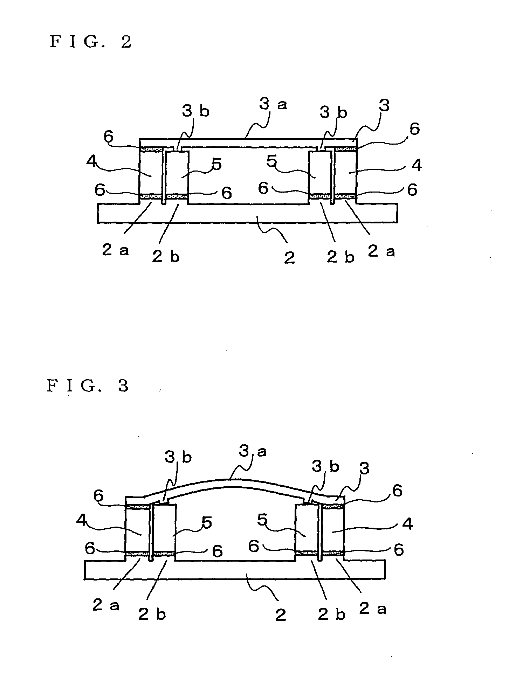

Fig. 1 is a diagram showing an embodiment of a variable shape mirror according to the present invention and is an exploded perspective view in which structural elements of the variable shape mirror are shown in an exploded manner. In addition, Fig. 2 is a general cross sectional view of the variable shape mirror shown in Fig. 1 in the assembled state, cut along the line A-A in Fig. 1. With reference to Figs. 1 and 2, a structure of the variable shape mirror according to the present embodiment will be described.

Numeral 1 denotes the variable shape mirror that is capable of deforming its reflection plane so that optical distortion of an incident light beam can be corrected. This variable shape mirror 1 includes a support substrate 2, a mirror substrate 3 that is opposed to the support substrate 2, fixing members 4 that are disposed on the support substrate 2 and fix the mirror substrate 3, and piezoelectric elements 5 that are disposed on the support substrate 2 and press the mirror substrate 3 by their expansion and contraction so that a reflection plane 3a can be deformed. Hereinafter, the individual portions will be described in detail.

The support substrate 2 plays a role of supporting the fixing member 4 and the piezoelectric element 5. The support substrate 2 is made up of an insulating member and is formed with glass or ceramics or the like, for example. On the support substrate 2, there are support tables 2a and 2b on which the fixing member 4 and the piezoelectric element 5 are disposed, respectively. Furthermore, a protruding pattern 2c is drawn out from each of the support tables 2b on which the piezoelectric element 5 are disposed. Note that the support tables 2a and 2b and the protruding pattern 2c are formed by an etching process or a sandblasting process or the like, for example.

The support table 2b on which the piezoelectric element 5 is disposed is covered with an Au layer, which has a function as an electrode of the piezoelectric element 5 and a function of bonding the piezoelectric element 5 with the support substrate 2. In addition, the protruding pattern 2c extending from the support table 2b on which the piezoelectric element 5 is disposed is also covered with an Au layer, so that the protruding pattern 2c works as a wiring pattern for supplying electric power from the outside to the piezoelectric element 5. The Au layer covering the support table 2b and the protruding pattern 2c is formed by a vapor deposition method or a sputtering method, for example.

Although the present embodiment adopts the structure of providing the support table 2a for supporting the fixing member 4 for the purpose of facilitating positioning or the like, the present invention is not limited to this structure. It is possible, for example, to adopt a structure in which the support table 2a for supporting the fixing member 4 is not provided. Furthermore, although the support table 2b and the protruding pattern 2c are covered with the Au layer in the present embodiment, the present invention is not limited to this structure. It is possible to adopt a structure in which they are covered with other metal layers or a structure in which the support table 2a and the protruding pattern 2c are made of silicon (Si) that has conductivity, and the protruding pattern 2c is not covered with the Au layer.

The mirror substrate 3 is disposed in substantially parallel with the support substrate 2 and is opposed to the same, and the reflection plane 3 a is formed on the surface that is opposite to the surface facing the support substrate 2. Since this mirror substrate 3 has a structure of being deformed by expansion and contraction of the piezoelectric elements 5 so that the reflection plane 3 a is also deformed, it is required to be formed having a small thickness. In addition, in order to avoid a breakage of the mirror substrate 3 when it is deformed by the expansion and contraction of the piezoelectric element 5, it is required to be made of a material having stiffness. Considering this point, the mirror substrate 3 is made up of a silicon (Si) substrate having a thickness of approximately 100 µm in the present embodiment.

Although the mirror substrate 3 is made of silicon in the present embodiment, the present invention is not limited to this structure. It may be made of other material as long as it can be thinner and has stiffness.

The reflection plane 3a of the mirror substrate 3 is obtained by forming an aluminum (Al) layer on the mirror substrate 3. The A1 layer is formed by a vapor deposition method or a sputtering method or the like. Note that the reflection plane 3a can be made not only of aluminum but also of other material as long as it can realize a desired reflection coefficient of reflection light of a light beam entering the reflection plane 3 a of the variable shape mirror 1. For example, gold (Au) or silver (Ag) or the like can be used as various modifications. In addition, although the entire of the upper surface of the mirror substrate 3 is made the reflection plane 3a in the present embodiment, the present invention is not limited to this structure. It is possible to adopt another structure in which an area of the reflection plane 3 a is determined in accordance with an incident diameter of the incident light beam, so that a reflection layer is formed only in the area.

In addition, the surface of the mirror substrate 3 that faces the support substrate 2 is provided with a protruding portion 3b that contacts with the piezoelectric element 5 as shown in Fig. 2. This is provided for transferring a force efficiently that is applied to the mirror substrate 3 by expansion and contraction of the piezoelectric element 5. This protruding portion 3b is formed by an etching process, for example. Although the protruding portion 3b is formed in the structure of this embodiment, the present invention is not limited to this structure. It is possible to adopt a structure in which the protruding portion 3b is not provided.

The fixing member 4 is disposed on the support substrate 2 and plays a role of fixing the mirror substrate 3. In the present embodiment, the fixing member 4 supports the mirror substrate 3 at eight points including its four corners and middle portions of four sides on the outer rim of the rectangular mirror substrate 3 (positions sandwiched by two of the four fixing members 4 disposed at corners). Note that the arrangement of the fixing members 4 is not limited to the structure of the present embodiment, but various modifications are possible as long as the outer rime of the mirror substrate 3 can be fixed securely by the structure.

This fixing member 4 is made of glass or ceramics or the like, for example. Each of the bonding of the fixing member 4 with the support substrate 2 and the bonding of the fixing member 4 with the mirror substrate 3 is performed by the method in which the Au layer that is a bonding layer 6 is disposed between them, and a pressure is applied for bonding at high temperature within the range of 400 to 550 degrees centigrade. Note that it is possible to use adhesive for the bonding.

The piezoelectric element 5 can be expanded or contracted in the direction perpendicular to the reflection plane 3a when a voltage is applied to it. Thus, the mirror substrate 3 as well as the reflection plane 3a can be deformed. A type of the material of the piezoelectric element 5 is not limited in particular as long as it is piezoelectric ceramics such as barium titanate (BaTiO₃) or lead titanate zirconate (Pb(ZrₓTi₁₋ₓ)O₃). In the present embodiment, lead titanate zirconate is used because it has good piezoelectric characteristics.

The piezoelectric elements 5 are disposed on the support substrate 2 and on the inside of the fixing members 4 that are disposed on the outer rim side of the mirror substrate 3. Moreover, four of them are arranged on the support substrate 2 in the cross direction, and the piezoelectric elements 5 facing each other are disposed in a symmetric manner with respect to an axis that passes through the center of the reflection plane 3a and is perpendicular to the reflection plane 3a. The piezoelectric elements 5 are disposed in this way in order to deform the reflection plane 3a easily with a good balance without increasing the number of the piezoelectric elements 5 excessively. However, the arrangement and the number of the piezoelectric elements 5 are not limited to this structure but can be modified variously.

The piezoelectric element 5 and the support substrate 2 are thermo-bonded to each other via the Au layer under a high temperature condition (e.g., at 400-550 degrees centigrade). Note that it is possible to bond the piezoelectric element 5 with the support substrate 2 by using adhesive. On the other hand, the piezoelectric element 5 is not bonded to the mirror substrate 3 in this structure.

The piezoelectric element 5 is expanded or contracted when a voltage is applied to it. One of the electrodes for applying a voltage to the piezoelectric element 5 is realized by the Au layer that covers the support table 2b disposed on the support substrate 2 as described above, and the other electrode is realized by the mirror substrate 3 made of silicon. In other words, the mirror substrate 3 plays a role as a common electrode for all the four piezoelectric elements 5. Therefore, the mirror substrate 3 is adapted to contact with the piezoelectric element 5 normally.

Note that a structure of the electrodes and wiring for the piezoelectric element 5 is not limited to the structure of the present embodiment. For example, it is possible to adopt a structure in which the piezoelectric element 5 is disposed on the support substrate 2 without providing the support table 2b, and a through hole is provided to the support substrate 2 so that a wiring passes through the through hole to form one electrode for the piezoelectric element 5 and other electrode for the piezoelectric element 5 is formed on the surface of the mirror substrate 3 facing the support substrate 2. In addition, if the piezoelectric element 5 is a lamination type piezoelectric actuator, it is possible to adopt a structure in which both the plus and the minus electrodes are drawn out on the support substrate 2. In this case, even if the piezoelectric element 5 does not contact with the mirror substrate 3, it is possible to apply a voltage to the piezoelectric element 5.

An operation of the variable shape mirror 1 having the above-mentioned structure will be described. Fig. 3 is a diagram showing a state where a piezoelectric element 5 is expanded in the variable shape mirror 1 shown in Fig. 2. As shown in Fig. 3, if the piezoelectric element 5 is expanded, the mirror substrate 3 is pressed upward so that the reflection plane 3a is deformed. On the other hand, since the piezoelectric element 5 and the mirror substrate 3 are not bonded to each other, the mirror substrate 3 is not deformed when the piezoelectric element 5 is contracted. Although Fig. 3 shows a state where both the left and the right piezoelectric elements 5. are expanded in the same manner when the same voltage is applied to them, different voltages can be applied to the piezoelectric elements 5. In other words, voltages that are applied to the piezoelectric elements 5 can be controlled separately so that a desired deformation of the reflection plane 3 a can be obtained.

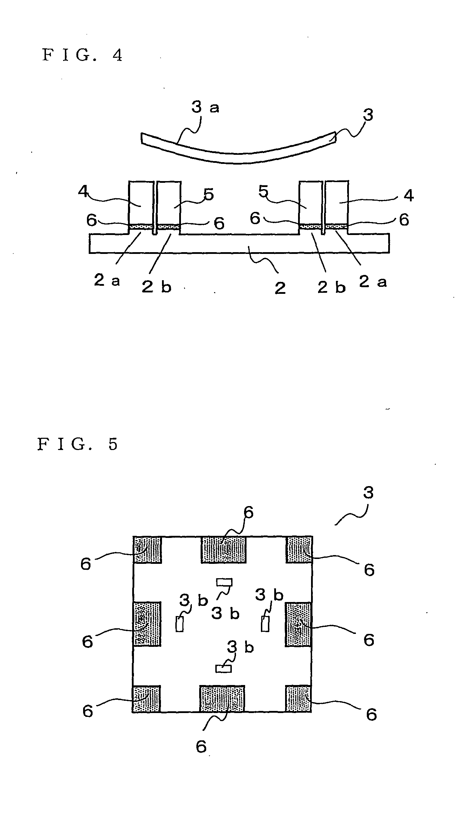

Further in the structure of this embodiment, the reflection plane 3 a is not deformed when the piezoelectric element 5 is contracted. However, as shown in Fig. 4 for example, it is possible to adopt another structure in which the mirror substrate 3 has a the concave reflection plane 3 a and the convex surface facing the support substrate 2, so that the reflection plane 3a can be deformed when the piezoelectric element 5 is contracted. In other words, it is structured so that the reflection plane 3a becomes substantially parallel with the support substrate 2 if the piezoelectric element 5 is not expanded or contracted as shown in Fig. 2. Then, the reflection plane 3 a can be deformed not only in the case where the piezoelectric element 5 is expanded but also in the case where the piezoelectric element 5 is contracted. Note that the mirror substrate 3 having a concave reflection plane can be formed by laminating different materials having different coefficients of thermal contraction.

In addition, it is possible to adopt a structure in which the piezoelectric element 5 and the mirror substrate 3 are bonded to each other so that the reflection plane 3a can be deformed also in the case where the piezoelectric element 5 is contracted. However, it is preferable that the mirror substrate 3 and the piezoelectric element 5 are not bonded to each other as described later.

Next, the structure that prevents occurrence of distortion in the reflection plane 3 a in the assembling process, which is a feature of the variable shape mirror 1 of the present embodiment, will be described. As described above, the mirror substrate 3 and the fixing member 4 are bonded to each other by disposing the Au layer that is the bonding layer 6 between the mirror substrate 3 and the fixing member 4.
Although the conventional method adopts the structure in which the bonding layer 6 is provided to the entire surface of the mirror substrate 3 facing the support substrate 2, the present embodiment adopts the structure in which the bonding layer 6 is provided to the mirror substrate 3 only in the portion that is bonded to the fixing member 4 as shown in Fig. 5. Note that Fig. 5 is a general plan view of the surface of the mirror substrate 3 facing the support substrate 2. In addition, when the mirror substrate 3 and the fixing member 4 are bonded via the Au layer, the Au layer is provided also to the fixing member 4.

Since the bonding layer 6 that is provided to the mirror substrate 3 has the structure as described above, distortion that may occur in the bonding layer 6 provided to the mirror substrate 3 resulted from residual stress such as tensile stress or compressive stress can be reduced, so that distortion that may occur in the reflection plane 3 a of the mirror substrate 3 when the mirror substrate 3 and the fixing member 4 are bonded to each other can be reduced.

In addition, as described above, the mirror substrate 3 of the present embodiment has the protruding portion 3b (see Fig. 2) formed by the etching process for a purpose of transferring efficiently a force generated when the piezoelectric element 5 is expanded. In this case, if the bonding layer 6 is formed on the entire surface in spite of roughness of the surface on which the bonding layer 6 is provided, alloying of the Au layer (the bonding layer 6) with the Si substrate (the mirror substrate 3) may becomes uneven when they are bonded to each other. This can be also a factor of causing distortion in the reflection plane 3a. Concerning this point, the structure of the present embodiment can reduce an influence thereof because the Au layer is provided only in the partial area.

As described above, when the Au layer having a thickness of approximately 1 µm is formed on one plate-like surface of the mirror substrate 3 having a size of 12 mm x 12 mm and a thickness of approximately 100 µm, a generated flexure of the mirror substrate 3 is approximately 10-15 µm. In contrast, if a thickness of the mirror substrate 3 is approximately 300 µm, a generated flexure becomes approximately 2 µm. Therefore, the present invention is effective in particular in the case where a thickness of the mirror substrate 3 is smaller than 300 µm. Considering that too small thickness of the mirror substrate 3 causes unstableness of strength of the mirror substrate 3, it is preferable that the mirror substrate 3 of the variable shape mirror 1 of the present invention have a thickness in a range of 50-300 µm. Note that the lower limit value 50 µm of the thickness of the mirror substrate 3 is determined considering strength or the like of the mirror substrate 3 as described above and that it does not always mean that the present invention cannot apply to the case where the thickness of the mirror substrate 3 is smaller than the lower limit value.

The Au layer that is the bonding layer 6 can be formed on the mirror substrate 3 only in the portion to be bonded to the fixing member 4 easily by the method of masking other portions that do not need the bonding layer 6 and forming the Au layer by a vapor deposition method or a sputtering method, for example. It is possible to use other known methods.

In addition, in the structure of the present embodiment, the mirror substrate 3 and the piezoelectric element 5 are not bonded to each other as described above. This is for preventing occurrence of distortion that may occur in the bonding portion when the bonding layer 6 is disposed for bonding the piezoelectric element 5 to the mirror substrate 3. Furthermore, the piezoelectric element 5 is disposed at a position corresponding to the incident area of the light beam entering the variable shape mirror 1 or in the vicinity and the outside of the incident area, unlike the fixing member 4. Therefore, it is effective that the piezoelectric element 5 is not bonded to the mirror substrate 3 for preventing distortion that may occur in the reflection plane 3 a. Note that the reflection plane 3a can be deformed sufficiently even if the piezoelectric element 5 is not bonded to the mirror substrate 3, as described above.

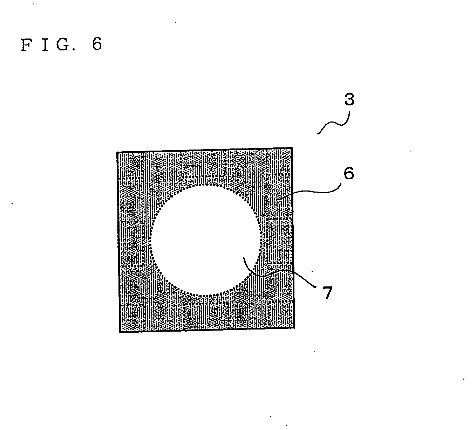

Although the embodiment described above adopts the structure in which the bonding layer 6 for bonding the mirror substrate 3 and the fixing member 4 to each other is provided to the mirror substrate 3 only in the portion to be bonded to the fixing member 4, the present invention is not limited to this structure. If distortion does not occur in the area of the portion of the reflection plane 3a to be deformed, in which the light beam enters the reflection plane 3 a of the variable shape mirror 1, optical distortion in the incident light beam can be corrected appropriately by the variable shape mirror 1. Therefore, as shown in Fig. 6 for example, it is possible to adopt the structure in which the bonding layer 6 is formed in the entire surface corresponding to the outside of an incident area 7 of the light beam entering the reflection plane 3a (the area enclosed by the circle in Fig. 6). If the adhesive layer 6 is formed in this manner, it is advantages that a mask for forming the adhesive layer 6 can have a simple shape.

Note that Fig. 6 is a general plan view of the surface of the mirror substrate 3 facing the support substrate 2. In addition, the rectangular areas shown in Fig. 6 with broken lines show positions where the fixing members 4 are bonded. The positions where the fixing members 4 are bonded are located outside the incident area 7 of the light beam entering the variable shape mirror 1.

Although the embodiment described above shows the case where the bonding layer 6 disposed between the mirror substrate 3 and the fixing member 4 is the Au layer, the bonding layer 6 is not limited to the Au layer but can be other metal layers as long as it can bond the mirror substrate 3 and the fixing member 4 to each other by thermocompression bonding. For example, it is possible to use an alloy of gold and tin (Au-Sn alloy) or aluminum (Al) or the like. However, it is preferable to use the Au layer because bonding strength can be enhanced if the Au layer is used as the bonding layer 6.

Although the embodiment described above adopts the structure in which the metal layer (Au layer) is used as the bonding layer 6 that is disposed between the mirror substrate 3 and the fixing member 4, it is possible to use adhesive. It is possible also in this case to reduce distortion that may occur in the reflection plane 3a. Note that the adhesive can be applied to a limited area on the mirror substrate 3 by a method of using adhesive made of a photosensitive resin and a photolithography process, for example.

Furthermore, although a general shape of the variable shape mirror 1 in the embodiment described above is a rectangular shape as shown in Fig. 1, it is not limited to this shape in particular but can be modified within the scope of the present invention without deviating from the object thereof. For example, the support substrate 2 and the mirror substrate 3 and the like may have a circular shape, or the mirror substrate 3 and the support substrate 2 may have the same size.

Since the variable shape mirror of the present invention can reduce distortion that may occur in the reflection plane in the assembling process, optical distortion in the incident light beam can be corrected appropriately by using the variable shape mirror of the present invention. Therefore, the variable shape mirror of the present invention can be applied to various optical devices having an optical system that needs correction of optical distortion in a light beam. For example, it can be applied to an optical pickup device, a video projector, a digital camera and the like.

## Claims

1. A variable shape mirror comprising:
a support substrate;
a mirror substrate that is opposed to the support substrate and has a reflection plane on the surface opposite to the surface facing the support substrate;
a fixing member that is disposed on the support substrate and fixes the mirror substrate; and
at least one piezoelectric element that is disposed on the support substrate and is expanded or contracted when a voltage is applied so that an area of the mirror substrate enclosed by a portion fixed by the fixing member can be deformed,
**characterized in that**
a bonding layer for bonding the mirror substrate and the fixing member to each other is provided to the surface of the mirror substrate opposite to the surface on which the reflection plane is formed, and the bonding layer is formed in an area that corresponds to the outside of an incident area of a light beam that enters the reflection plane.

2. The variable shape mirror according to claim 1, **characterized in that**
the bonding layer that is provided to the mirror substrate is formed only in a portion where the mirror substrate is bonded to the fixing member.

3. The variable shape mirror according to claim 1 or 2, **characterized in that**
the bonding layer is a metal layer that enables the mirror substrate and the fixing member to be bonded to each other by thermocompression bonding.

4. The variable shape mirror according to any one of claims 1 to 3, **characterized in that**
a thickness of the mirror substrate is in a range of 50-300 µm.

5. The variable shape mirror according to any one of claims 1 to 4, **characterized in that**
the mirror substrate and the piezoelectric element are not bonded to each other.
